# EUROPEAN PATENT SPECIFICATION

(11) **EP 4 230 798 B1**
(45) Date of publication and mention of the grant of the patent: **16.09.2026**
(21) Application number: 22209836.0
(22) Date of filing: 28.11.2022
(51) Int. Cl.: E02B 17/00, B63B 1/10, B63B 27/30, B63B 35/00

(54) **METHOD OF DISASSEMBLING OFFSHORE STRUCTURE AND FLOATING BODY APPARATUS**
VERFAHREN ZUR DEMONTAGE EINER OFFSHORE-STRUKTUR UND VORRICHTUNG FÜR EINEN SCHWIMMENDEN KÖRPER
PROCÉDÉ DE DÉMONTAGE D'UNE STRUCTURE EN MER ET APPAREIL À CORPS FLOTTANT

(30) Priority: 21.02.2022 JP 2022024376
(43) Date of publication of application: 23.08.2023
(73) Proprietor: Mitsubishi Heavy Industries, Ltd., Chiyoda-ku Tokyo 100-8332 (JP)
(72) Inventor: NISHIGAKI, Makoto, Tokyo 100-8332 (JP); KANEMASU, Masayuki, Tokyo 100-8332 (JP); SUZUKI, Akihito, Tokyo 100-8332 (JP)
(74) Representative: Studio Torta S.p.A.

(56) References cited:
- EP-A1- 3 674 199
- US-A- 3 835 800

## Description

### TECHNICAL FIELD

The present disclosure relates to a method of disassembling an offshore structure including a tower for various observation facilities, communication facilities, illumination facilities, excavation facilities, power generation facilities, and the like (such as, for example, a meteorological tower, a transmission tower, a lighthouse, and an offshore windmill) and to a floating body apparatus used for the disassembly method.

### BACKGROUND ART

Patent Document 1 discloses a disassembly method for a steel tower supporting chimney structure including a chimney main body installed on a chimney base and a chimney supporting steel tower constructed on the chimney base around the chimney main body without being coupled to the chimney main body. The method aims to make the disassembly free of works at high places. With this method, a portion to be removed is formed at a lowermost position of the chimney main body on a collapsing direction side, and a fixed state between a predetermined region of the chimney supporting steel tower on the side opposite to the collapsing direction side and the chimney base is released. Then, at least one of the chimney main body and the chimney supporting steel tower is pressed in the collapsing direction, to collapse the chimney main body and the chimney supporting steel tower at once.

Patent Document 2 discloses a method of collapsing a chimney structure supported by three pillars. With this method, a lower portion of one of the three pillars positioned along the collapsing direction is removed, and a collapse axis is reinforced to improve the stability of the direction in which the cylinder collapses. Then, the remaining two pillars are cut and lifted, whereby the chimney structure collapses with the cylinder body serving as an axis.

### CITATION LIST

### PATENT LITERATURE

Patent Document 1: JP 2007-327301 A
Patent Document 2: JP 2002-013300 A
Patent Document 3:US 3 835 800 discloses a method of disassembly an offshore structure wherein a floating body apparatus comprises at least one column including a ballast tank, a plate member coupled to at least one column underwater with the column installed offshore and a support member that is coupled to at least one column offshore with the column installed above seawater and capable of supporting the main body of the offshore structure collapsed in the direction of the floating body apparatus.

### SUMMARY OF INVENTION

### TECHNICAL PROBLEM

The inventors of the present application have been studying a method of disassembling an offshore structure including a tower, with the smallest possible amount of work at high places. Specifically, disassembly is performed after a root portion of the tower has been cut by laser, explosion, or other mechanical methods, and a main body of the offshore structure (portion above the cutting position of the offshore structure) has been collapsed. However, collapsing the main body of the offshore structure involves a risk that the main body of the offshore structure sinks in the sea to be unable to be collected.

The present disclosure has been made in view of the above problem, and an object of the present disclosure is to provide a method of disassembling an offshore structure to allow an offshore structure including a tower to be safely disassembled and a main body of the offshore structure to be collected and a floating body apparatus used for the disassembly method.

### SOLUTION TO PROBLEM

According to the present invention there is provided a method of disassembling an offshore structure, the method comprising:
a conveying step of conveying a floating body apparatus toward a tower provided in the offshore structure;
an installing step of installing the floating body apparatus next to the tower;
a collapsing step of cutting the tower and collapsing a main body of the offshore structure toward the floating body apparatus; and
   a collecting step of collecting the main body of the offshore structure,
the floating body apparatus comprising:
   at least one column including a ballast tank;
   a plate member coupled to the at least one column underwater with the column installed offshore; and
   a support member that is coupled to the at least one column offshore with the column installed above seawater and is capable of supporting the main body of the offshore structure collapsed toward the floating body apparatus, wherein the at least one column includes a plurality of columns,
   the floating body apparatus further comprises a coupling member to couple the plurality of columns to each other in a row shape, and
   the method further comprises a coupling step of coupling the plurality of columns to each other in the row shape using the coupling member before the installing step,
   the method being characterized in that
   the installing step includes connecting the tower to one end portion of the coupling member on a tower side using a first rope, connecting a ship to another end portion of the coupling member on a side opposite to the tower side using a second rope, and pulling the coupling member using the ship.

### ADVANTAGEOUS EFFECTS OF INVENTION

With the method of disassembling an offshore structure according to the present disclosure, an offshore structure including a tower can be safely disassembled and collected.

### BRIEF DESCRIPTION OF DRAWINGS

FIG. 1 is a flowchart illustrating an overview of a method of disassembling a meteorological tower according to a first embodiment.
FIG. 2 is a diagram illustrating an example of a conveying step illustrated in FIG. 1.
FIG. 3A is a side view illustrating a partial configuration of a floating body apparatus illustrated in FIG. 2.
FIG. 3B is a front view illustrating the partial configuration of the floating body apparatus illustrated in FIG. 2.
FIG. 3C is a diagram illustrating a configuration of a recess of a support member according to the first embodiment.
FIG. 4A is a diagram illustrating a configuration of a coupling member according to the first embodiment.
FIG. 4B is a diagram illustrating a configuration of a coupling member according to some embodiments.
FIG. 5 is a diagram illustrating an example of an installing step illustrated in FIG. 1.
FIG. 6 is a diagram illustrating an example of a collapsing step illustrated in FIG. 1.
FIG. 7 is a diagram illustrating an example of the collapsing step illustrated in FIG. 1.
FIG. 8 is a diagram illustrating an example of a collecting step illustrated in FIG. 1.
FIG. 9 is a diagram illustrating a configuration of a receiving member according to some embodiments.
FIG. 10 is a diagram illustrating a modification of the receiving member illustrated in FIG. 9.
FIG. 11 is a flowchart illustrating an overview of a method of disassembling a tower type offshore structure according to a second embodiment.
FIG. 12A is a diagram illustrating a tower attachment member according to the second embodiment.
FIG. 12B is a diagram illustrating a state in which a tower attachment member according to the second embodiment is attached to a tower.
FIG. 13 is a flowchart illustrating an overview of a method of disassembling a windmill according to a modification of the second embodiment.
FIG. 14A is a diagram illustrating a configuration of a nacelle attachment member according to a modification of the second embodiment.
FIG. 14B is a diagram illustrating a state where the nacelle attachment member according to the modification of the second embodiment is attached to a main body of the windmill.
FIG. 15 is a diagram illustrating a state in which a tower is provided with a lid member.
FIG. 16 is a flowchart illustrating an overview of a method of disassembling a windmill according to some embodiments.

### DESCRIPTION OF EMBODIMENTS

Hereinafter, some embodiments of the present disclosure will be described with reference to the accompanying drawings. However, dimensions, materials, shapes, relative positions and the like of components described in the embodiments or illustrated in the drawings shall be interpreted as illustrative only and not intended to limit the scope of the invention.

For example, expressions indicating relative or absolute disposition such as "in a direction," "along a direction," "parallel," "orthogonal," "center," "concentric," or "coaxial" shall not be construed as indicating only such disposition in a strict literal sense but also as indicating a state of being relatively displaced by a tolerance, or by an angle or a distance as long as the same function can be obtained.

For example, expressions indicating a state of being equal such as "same," "equal," or "uniform" shall not be construed as indicating only a state of being strictly equal but also as indicating a state in which there is a tolerance or a difference as long as the same function can be obtained.

For example, expressions indicating a shape such as a rectangular shape or a cylindrical shape shall not be construed as only indicating a shape such as a rectangular shape or a cylindrical shape in a strict geometrical sense but also as indicating a shape including depressions, protrusions, chamfered corners, or the like as long as the same effect can be obtained.

On the other hand, an expression such as "comprise," "include," "have," "contain," or "constitute" is not intended to be exclusive of other constituent elements.

A method and a floating body apparatus for disassembling an offshore structure according to embodiments of the present disclosure are a method and an apparatus used for disassembling an offshore structure. The offshore structure is not particularly limited as long as the structure includes a tower, and is, for example, a meteorological tower, a transmission tower, a lighthouse, or an offshore windmill. The term "disassembly" used herein does not mean a work of disassembling the offshore structure itself, and means a work of achieving a state where the offshore structure can be moved from the installed location, with the offshore structure separated from a foundation fixed to the seabed.

### First Embodiment

### (Method of disassembling meteorological tower)

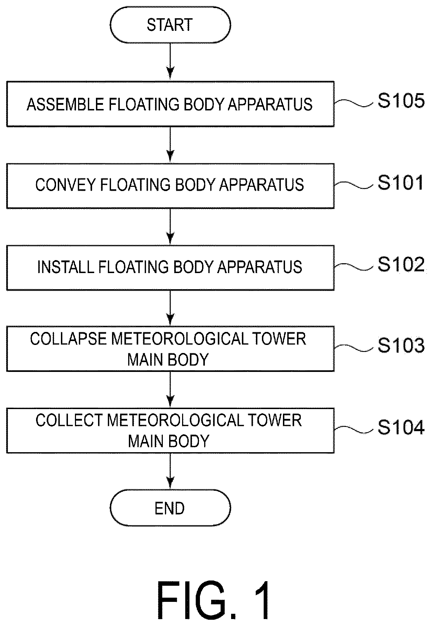

FIG. 1 is a flowchart illustrating an overview of a method of disassembling a meteorological tower 2A according to a first embodiment.

As illustrated in FIG. 1, the method of disassembling the meteorological tower 2A according to the first embodiment includes a conveying step S101 of conveying a floating body apparatus 4 toward a tower 8A (tower portion) of the meteorological tower 2A, an installing step S102 of installing the floating body apparatus 4 next to the tower 8A, a collapsing step S103 of cutting the tower 8A and collapsing a main body 2a of the meteorological tower 2A toward the floating body apparatus 4, and a collecting step S104 of collecting the main body 2a of the meteorological tower 2A.

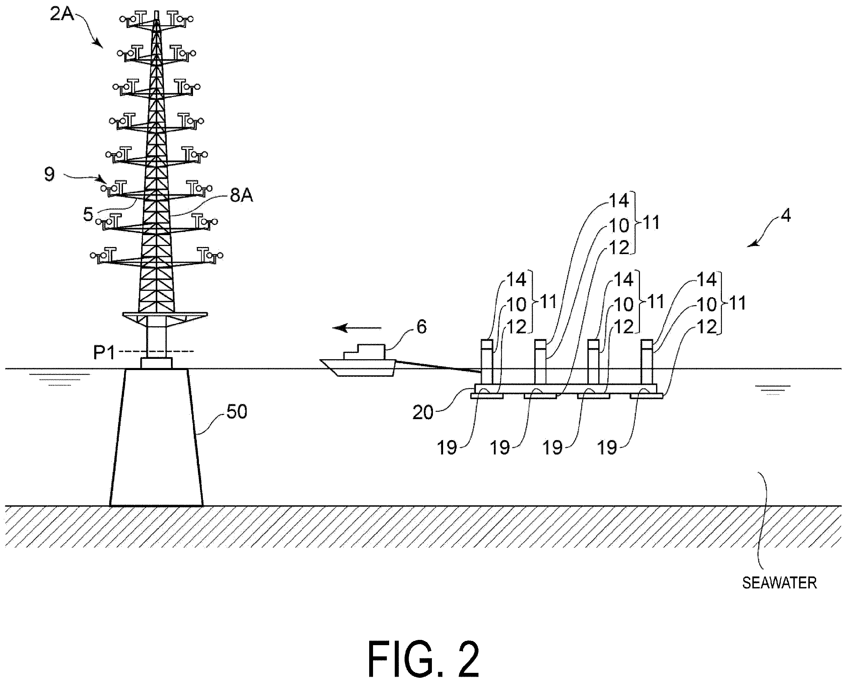

FIG. 2 is a diagram illustrating an example of the conveying step S101 illustrated in FIG. 1. As illustrated in FIG. 2, the meteorological tower 2A includes the tower 8A standing on a foundation 50 fixed to the seabed, and a plurality of branch protrusions 5 that are branched and extend from the tower 8A. The branch protrusions 5 are each provided with a measurement device 9 for observing a weather-related parameter (such as, for example, wind direction, wind speed, temperature, humidity, or rainfall). The dashed line in FIG. 2 indicates a cutting position P1 where the tower 8A is cut in the collapsing step S103 described below.

As illustrated in FIG. 2, in the conveying step S101, the floating body apparatus 4 is towed by a ship 6 to be conveyed to a location where the meteorological tower 2A is installed.

The floating body apparatus 4 will be described. The floating body apparatus 4 is configured to float in seawater, and includes columns 10, plate members 12, and support members 14. As described below, one plate member 12 and one support member 14 are coupled to each column 10.

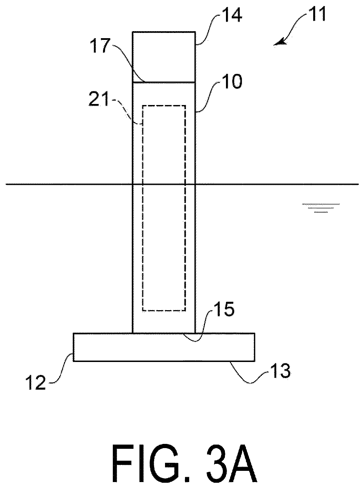

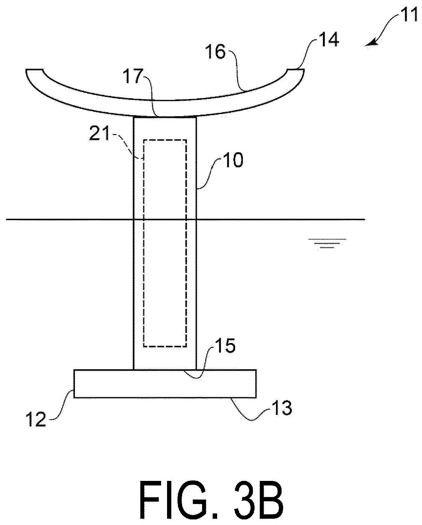

FIG. 3A is a diagram illustrating a partial configuration of the floating body apparatus 4 illustrated in FIG. 2, in the side view of the floating body apparatus 4. FIG. 3B is a diagram illustrating the partial configuration of the floating body apparatus 4 illustrated in FIG. 2, in the front view of the floating body apparatus 4. In the present disclosure, the partial configuration of the floating body apparatus 4 indicates one column 10, one plate member 12 coupled to this column 10, and one support member 14 coupled to this column 10. Hereinafter, the partial configuration of the floating body apparatus 4 is referred to as "receiving member 11".

As illustrated in FIGS. 3A and 3B as an example, the column 10 has a ballast tank 21. The column 10 is produced by, for example, preparing a plurality of flat plate shaped panels such as a steel plates and connecting (welding) these panels to each other. The column 10 has a tubular shape having a longitudinal direction extending in the vertical direction. A sinking depth (draft) of the floating body apparatus 4 into the seawater can be adjusted based on the amount of seawater injected into the ballast tank 21. Note that the column 10 may have a rectangular tubular shape, or may have a tubular shape with other cross-sectional shapes to be a cylinder or the like. In an example described in the present disclosure, the column 10 has a rectangular tubular shape.

The plate member 12 has a plate shape, and is coupled to the column 10 while being under the sea, in a state where the column 10 is installed offshore. The plate member 12 is coupled to a lower surface 15 of the column 10, with a lower surface 13 of the plate member 12 hiding the entirety of the lower surface 15 of the column 10, in bottom view of the column 10. Thus, an area of the lower surface 13 of the plate member 12 is larger than an area of the lower surface 15 of the column 10. The present disclosure is not limited to the configuration in which the plate member 12 is coupled to the lower surface 15 of the column 10. In some embodiments not illustrated, the plate member 12 is coupled to a side surface of the column 10. In this case, the entire plate member 12 may be submerged in the sea by adjusting the draft of the floating body apparatus 4.

The support member 14 is coupled to the column 10 while being above the sea, in a state where the column 10 is installed offshore. The support member 14 is configured to be capable of supporting the main body 2a of the meteorological tower 2A collapsed toward the floating body apparatus 4. In the mode illustrated as an example in FIG. 3A and FIG. 3B, the support member 14 is coupled to an upper surface 17 of the column 10. In the first embodiment, as illustrated in FIG. 3B as an example, the support member 14 includes a recess 16 that is recessed toward the column 10. Thus, the recess 16 of the support member 14 can receive the main body 2a of the meteorological tower 2A collapsing, and can prevent the main body 2a of the meteorological tower 2A from falling off from the support member 14. The inner surface of the recess 16 is concavely curved to have an outer shape smoothly changing. A material forming the support member 14 is not particularly limited, and may be an elastic member such as rubber or metal such as SUS. In the present embodiment, the main body 2a of the meteorological tower 2A refers to a portion of the meteorological tower 2A above the cutting position P1 of the tower 8A, and includes, for example, part of the tower 8A and part of the plurality of branch protrusions 5.

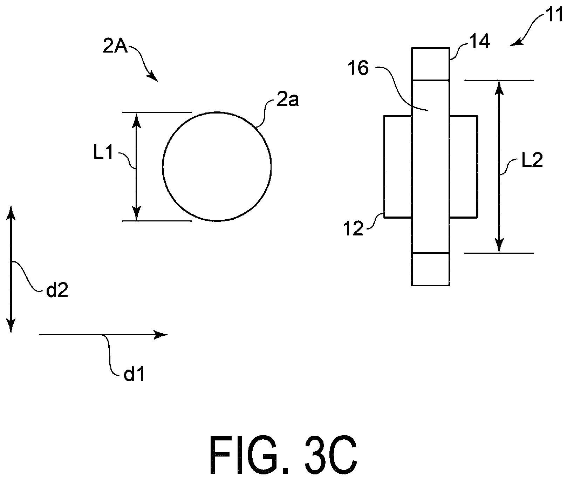

FIG. 3C is a diagram illustrating a configuration of the recess 16 of the support member 14 according to the first embodiment. FIG. 3C is an upper view of the receiving member 11 (partial configuration of the floating body apparatus 4) illustrated in FIG. 2. In upper view of the meteorological tower 2A, a direction in which the main body 2a of the meteorological tower 2A collapses toward the floating body apparatus 4 in the collapsing step S103 is referred to as a collapsing direction d1, and a direction orthogonal to the collapsing direction d1 is referred to as an orthogonal direction d2. In the orthogonal direction d2, the recess 16 of the support member 14 is wider than the main body 2a of the meteorological tower 2A. Specifically, L2 > L1 holds, where L1 is a length of the main body 2a of the meteorological tower 2A in the orthogonal direction d2, and L2 is a length of the recess 16 of the support member 14 in the orthogonal direction d2.

Referring back to FIG. 2, a configuration of the floating body apparatus 4 other than the receiving member 11 is described. In the first embodiment, as illustrated in FIG. 2 as an example, the floating body apparatus 4 includes four receiving members 11 (columns 10, plate members 12, and support members 14). The floating body apparatus 4 further includes a coupling member 20 to couple the four columns 10 to each other in a row shape. The specific gravity of the coupling member 20 is, for example, 100% or more and less than 120% of the specific gravity of seawater. The coupling member 20 is placed on at least one of upper surfaces 19 of the four plate members 12.

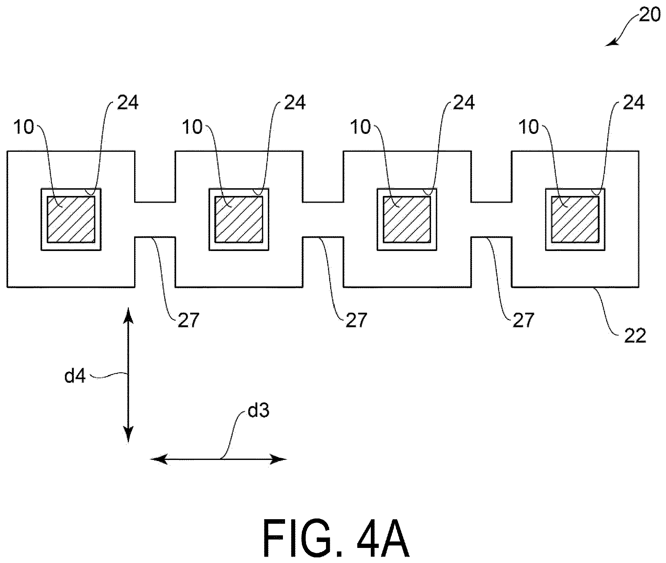

FIG. 4A is a diagram illustrating a configuration of the coupling member 20 according to the first embodiment. As illustrated in FIG. 4A as an example, in the first embodiment, the coupling member 20 includes one plate-like member 22 having a longitudinal direction d3. In the plate-like member 22, four insertion holes 24 are formed spaced with each other along the longitudinal direction d3. The insertion holes 24 are not particularly limited as long as the column 10 can be inserted therein, and have a rectangular shape, for example. In some embodiments, the insertion hole 24 is configured to be capable of preventing the rotation of the column 10 inserted in the insertion hole 24. For example, the length of one side of the insertion hole 24 having a rectangular shape is shorter than the length of the diagonal line of the cross section of the column 10 having a rectangular tubular shape. In the mode illustrated in FIG. 4A as an example, the plate-like member 22 includes a narrow portion 27, between the adjacent ones of the insertion holes 24, where a length in a width direction d4 crossing the longitudinal direction d3 is short. With this configuration, a weight and manufacturing cost of the floating body apparatus 4 can be reduced.

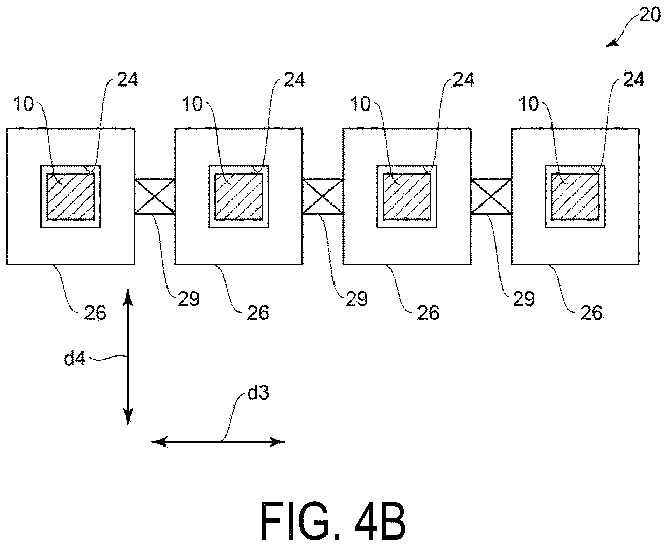

FIG. 4B is a diagram illustrating a configuration of a coupling member 20 according to some embodiments (an embodiment different from the first embodiment). In a mode illustrated in FIG. 4B as an example, the coupling member 20 includes a plurality of ring portions 26 and connection portions 29. The plurality of ring portions 26 are each provided as a member independent from the other. The ring portion 26 has a ring shape in which one insertion hole 24 is formed. As described above, the insertion holes 24 are not particularly limited as long as they are configured to enable the insertion of the columns 10 therein. The connection portion 29 connects the two ring portions 26 arranged adjacent to each other. The method of connection by the connection portions 29 is not limited. The two ring portions 26 adjacent to each other may be, for example, magnetically connected. The two ring portions 26 adjacent to each other may be connected using a chain (mechanical connection). When the coupling member 20 includes three or more ring portions 26, the three or more ring portions 26 are arranged in a row shape, and the connection portion 29 is provided between two adjacent ones of the ring portions 26.

As illustrated in FIG. 1, the method of disassembling the meteorological tower 2A according to the first embodiment further includes a coupling step S105 of coupling the four columns 10 to each other in a row shape using the coupling member 20 before the conveying step S101. Thus, in the coupling step S105, the floating body apparatus 4 is assembled. In the coupling step S105 according to the first embodiment, the floating body apparatus 4 is assembled by inserting each of the four columns 10 into a corresponding one of the four insertion holes 24 formed in the plate-like member 22.

In some embodiments, the method of disassembling the meteorological tower 2A includes the coupling step S105 after the conveying step S101 and before the installing step S102. In this case, for example, the four receiving members 11 (columns 10, plate members 12, and support members 14) and the coupling member 20 are separately conveyed to a location next to the tower 8A, and the floating body apparatus 4 is assembled by coupling the four columns 10 at the location next to the tower 8A. Alternatively, when the coupling member 20 has a configuration illustrated in FIG. 4B as an example, the four receiving members 11 in which the columns 10 are inserted in the insertion holes 24 of the ring portions 26 are separately conveyed to the location next to the tower 8A, and the floating body apparatus 4 is assembled by coupling the four columns 10 at the location next to the tower 8A.

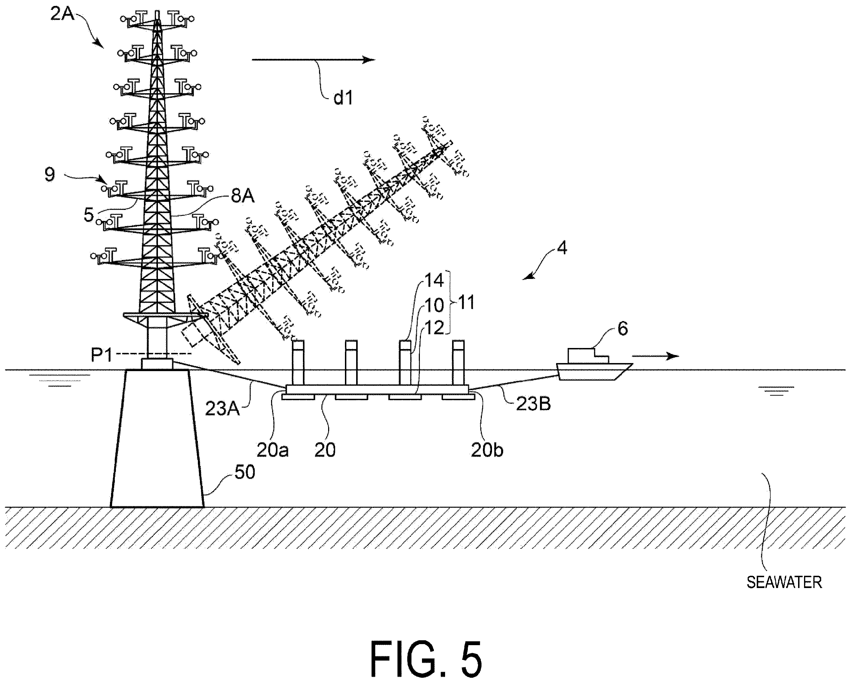

FIG. 5 is a diagram illustrating an example of the installing step S102 illustrated in FIG. 1. As illustrated in FIG. 5, in the installing step S102, the floating body apparatus 4 is installed next to the tower 8A. In the installing step S102, the floating body apparatus 4 is installed in the collapsing direction d1 from the position of the tower 8A. The floating body apparatus 4 is floating on the sea surface while being next to the tower 8A. More specifically, this expression "the floating body apparatus 4 is installed next to the tower 8A" means that the floating body apparatus 4 is installed offshore, in an appropriate direction from the tower 8A, with a distance h between the tower 8A and the floating body apparatus 4 being smaller than a height h of the tower 8A from the sea surface.

As illustrated in FIG. 5, in the installing step S102, a portion of the tower 8A below the cutting position P1 is connected to one end portion 20a of the coupling member 20 on the tower 8A side, using a first rope 23A. Furthermore, the other end portion 20b of the coupling member 20 on the side opposite to the tower 8A is connected to the ship 6 using a second rope 23B. In this state, the coupling member 20 is pulled by the ship 6.

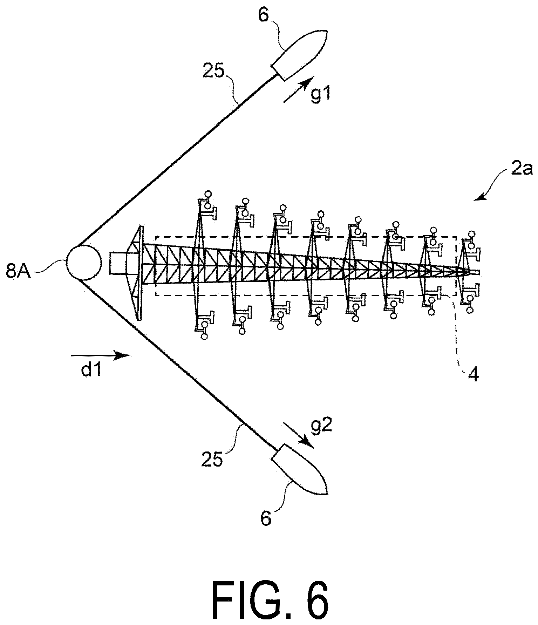

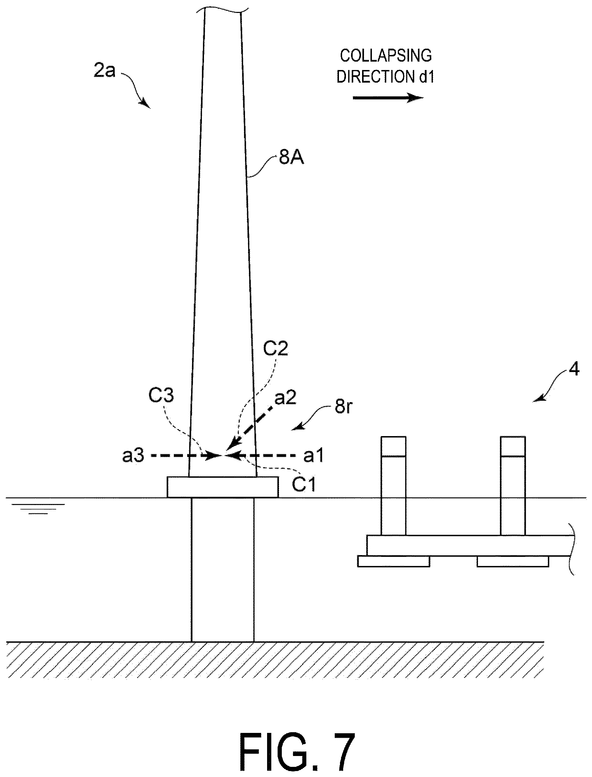

FIG. 6 is a diagram illustrating an example of the collapsing step S103 illustrated in FIG. 1. FIG. 7 is a diagram illustrating an example of the collapsing step S103 illustrated in FIG. 1, and illustrates an example different from that in FIG. 6.

As illustrated in FIG. 6, in the collapsing step S103, the tower 8A is cut using a laser, explosion, or other mechanical methods while pulling the tower 8A in two different directions g1 and g2 by two ships 6 using ropes 25, to collapse the main body 2a of the meteorological tower 2A in a direction d1 between the two directions g1 and g2. For example, the main body 2a of the meteorological tower 2A may be collapsed in the direction d1 between the two directions g1 and g2, with the tower 8A cut while pulling the tower 8A with equal force in the two different directions g1 and g2 by the two ships 6 using the ropes 25. As illustrated in FIG. 6, with the tower 8A cut and the main body 2a of the meteorological tower 2A collapsed toward the floating body apparatus 4 (in other words, with the floating body apparatus 4 arranged in advance on a side of the tower 8A in the direction d1 in which the main body 2a of the meteorological tower 2A collapses), the main body 2a of the meteorological tower 2A can be easily collected using the floating body apparatus 4.

As illustrated in FIG. 7, in the collapsing step S103, a first notch C1, a second notch C2, and a third notch C3 are formed in the tower 8A using a mechanical method. First, the first notch C1 is formed on the tower 8A by mechanical cutting a1 is performed on a root portion 8r of the tower 8A from the floating body apparatus 4 side of the tower 8A (one side) without penetrating the tower 8A (first cutting step). Next, mechanical cutting a2 is performed on the root portion 8r of the tower 8A at an angle different from an angle of the first notch C1 from the floating body apparatus 4 side of the tower 8A without penetrating the tower 8A, and the second notch C2 connected to the first notch C1 is formed on the tower 8A. Then, a portion (piece) of the tower 8A between the first notch C1 and the second notch C2 is removed from the tower 8A (second cutting step). Then, mechanical cutting a3 is performed on the root portion 8r of the tower 8A on the side opposite to the floating body apparatus 4 of the tower 8A (other side), whereby the third notch C3 is formed to be connected to at least one of the first notch C1 and the second notch C2 (third cutting step). Thus, the tower 8A is cut. In the mode illustrated in FIG. 7 as an example, the first notch C1 and the third notch C3 are each formed on the root portion 8r of the tower 8A along the horizontal direction, and the second notch C2 is diagonally formed on the root portion 8r of the tower 8A from the upper side toward the lower side.

In this manner, through the mechanical cutting a1 to the mechanical cutting a3, the main body 2a of the meteorological tower 2A can be collapsed toward the floating body apparatus 4 without pulling the tower 8A by the ship 6. Thus, the main body 2a of the meteorological tower 2A can be collected safely using the floating body apparatus 4 easily.

When there is a direction in which no branch protrusion 5 extends from the tower 8A, such a direction may be the collapsing direction d1. In such a case, in a state where the main body 2a of the meteorological tower 2A has collapsed, the direction in which no branch protrusions 5 extends from the tower 8A is the downward. In cases such as that where there is no direction in which no branch protrusion 5 extends from the tower 8A, the branch protrusion 5 extending in the collapsing direction d1 may be cut before the tower 8A is cut. Thus, the floating body apparatus 4 can be prevented from being damaged by the branch protrusion 5.

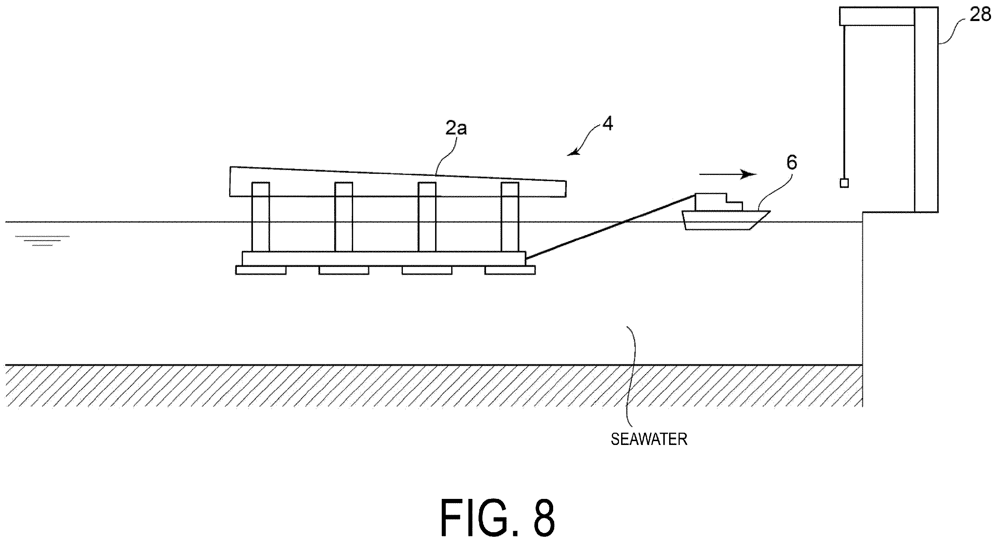

FIG. 8 is a diagram illustrating an example of the collecting step S104 illustrated in FIG. 1. As illustrated in FIG. 8, in the collecting step S104, collecting is performed with the floating body apparatus 4 carrying the main body 2a of the meteorological tower 2A conveyed to the shore, and the main body 2a of the meteorological tower 2A pulled up onto the land.

As illustrated in FIG. 8, in the collecting step S104, the floating body apparatus 4 carrying the main body 2a of the meteorological tower 2A is towed by the ship 6 to be conveyed to the shore, and the main body 2a of the meteorological tower 2A is pulled up onto the land using a crane 28. In the collecting step S104, the main body 2a of the meteorological tower 2A may be disassembled into several parts offshore, to prevent the weight of objects lifted by the crane 28 from exceeding the allowable load of the crane 28. When the main body 2a of the meteorological tower 2A is entirely lifted instead of being disassembled, the main body 2a of the meteorological tower 2A may be lifted using, for example, a large crane in a shipyard dock.

### Operational Effects

Operational effects of the method of disassembling the meteorological tower 2A according to the first embodiment will be described. According to the first embodiment, as illustrated in FIG. 1 as an example, before the tower 8A is cut, the floating body apparatus 4 is installed next to the tower 8A. Then, the tower 8A is cut, and the main body 2a of the meteorological tower 2A is collapsed toward the floating body apparatus 4. Thus, the main body 2a of the meteorological tower 2A can be collected, while being prevented from sinking in the sea using the floating body apparatus 4.

According to the first embodiment, the sinking depth of the floating body apparatus 4 into the sea can be made small due to drag acting on the plate member 12 when the main body 2a of the meteorological tower 2A collapsed toward the floating body apparatus 4 is supported by the support member 14. Thus, production of waves at the time when the main body 2a of meteorological tower 2A is received by the floating body apparatus 4 can be suppressed. Furthermore, scattering of debris, dust, or the like of the structure from the main body 2a of the meteorological tower 2A can be suppressed. By adjusting the amount of seawater injected into the ballast tank 21 of the column 10, the main body 2a of the meteorological tower 2A can be maintained to be above the sea by the floating body apparatus 4.

According to the first embodiment, the tower 8A is cut and the main body 2a of the meteorological tower 2A is collapsed toward the floating body apparatus 4. Thus, the amount of work at high places can be reduced compared with a case where the meteorological tower 2A is disassembled with a scaffold built around the tower 8A standing. Thus, the meteorological tower 2A can be safely disassembled and collected.

According to the first embodiment, the four columns 10 are coupled to each other in a row shape by the coupling member 20. Thus, the main body 2a of the meteorological tower 2A can be supported by the four receiving members 11 (columns 10, plate members 12, and support members 14).

According to the first embodiment, as illustrated in FIG. 4A as an example, the four insertion holes 24 are formed in the plate-like member 22. Thus the four columns 10 (receiving members 11) can be easily coupled to each other in a row shape by simply inserting each of the four columns 10 into a corresponding one of the four insertion holes 24.

According to the first embodiment, as illustrated in FIG. 5 as an example, the four receiving members 11, coupled to each other by the coupling member 20 in a row shape, can each be arranged at a position suitable for supporting the main body 2a of the meteorological tower 2A collapsing toward the floating body apparatus 4, by pulling the second rope 23B by the ship 6.

According to the first embodiment, since the specific gravity of the coupling member 20 is 100% or more and less than 120% of the specific gravity of seawater, the coupling member 20 sinks in seawater. Thus, the coupling member 20 is less likely to be affected by the waves, whereby the four columns 10 can be more stably coupled to each other in a row shape. Furthermore, since the specific gravity of the coupling member 20 is less than 120% of that of seawater, the load applied to the column 10 and the plate member 12 can be suppressed. For example, when the floating body apparatus 4 receives the main body 2a of the meteorological tower 2A, the receiving member 11 sinks deeper than the coupling member 20, and then rises due to the buoyant force of the receiving member 11. Then, the coupling member 20 is placed on the upper surfaces 19 of the plate member 12 of the receiving member 11 rising. The load applied to the plate member 12 at the time of this placement can be suppressed.

According to the first embodiment, the area of the lower surface 13 of the plate member 12 is larger than the area of the lower surface 15 of the column 10, whereby large drag acts on the plate member 12 when the support member 14 supports the main body 2a of the meteorological tower 2A collapsed toward the floating body apparatus 4, so that the sinking depth of the floating body apparatus 4 into the sea can be made small.

According to the first embodiment, as illustrated in FIG. 3B as an example, the support member 14 includes the recess 16, so that the main body 2a of the meteorological tower 2A, collapsed toward the floating body apparatus 4, can be prevented from falling from the support member 14.

In the first embodiment, the floating body apparatus 4 includes the four receiving members 11 (four columns 10), but the present disclosure is not limited to this mode. The floating body apparatus 4 includes any number of pluralities of receiving members 11. In some embodiments, the floating body apparatus 4 includes one receiving member 11. Thus, the floating body apparatus 4 includes one column 10. In this case, the floating body apparatus 4 does not include the coupling member 20.

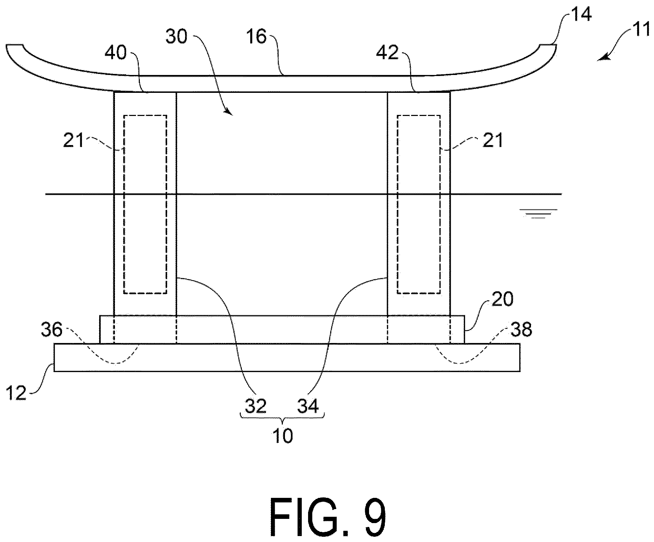

FIG. 9 is a diagram illustrating a configuration of the receiving member 11 according to some embodiments. As illustrated in FIG. 9 as an example, in some embodiments, the column 10 includes a first column member 32 and a second column member 34 that face each other with a gap 30 in between, in front view of the floating body apparatus 4. Each of the first column member 32 and the second column member 34 has a tubular shape, and includes the ballast tank 21 therein.

In the mode illustrated in FIG. 9 as an example, the plate member 12 connects a lower surface 36 of the first column member 32 and a lower surface 38 of the second column member 34. When the receiving member 11 is viewed from below, the lower surface 13 of the plate member 12 hides the entirety of the lower surface 36 of the first column member 32 and the entirety of the lower surface 38 of the second column member 34.

In the mode illustrated in FIG. 9 as an example, the support member 14 connects an upper surface 40 of the first column member 32 and an upper surface 42 of the second column member 34. Thus, the support member 14 is supported by the first column member 32 and the second column member 34.

According to the mode illustrated in FIG. 9 as an example, compared with a case where the column 10 is formed by the first column member 32 only (that is, when the receiving member 11 includes one column 10), the support member 14 can be easily widened. With the plate member 12 connecting the lower surface 36 of the first column member 32 and the lower surface 38 of the second column member 34, the first column member 32 or the second column member 34 can be prevented from collapsing toward the gap 30.

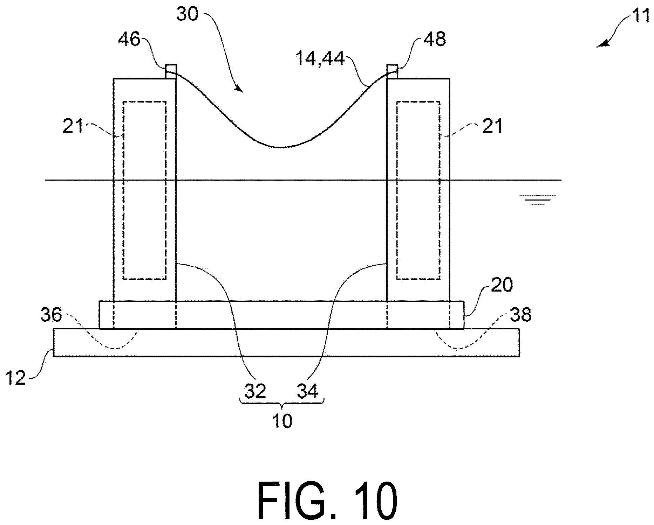

FIG. 10 is a diagram illustrating a modification of the receiving member 11 illustrated in FIG. 9. As illustrated in FIG. 10 as an example, in some embodiments, the support member 14 includes a sheet member 44, having a sheet shape and disposed to cover the upper part of the gap 30. The sheet member 44 is, for example, a net or an airbag. The upper part of the gap 30 is a part above the seawater surface, in a state where the floating body apparatus 4 is floating on the seawater.

In the mode illustrated in FIG. 10 as an example, the sheet member 44 has one end on the first column member 32 side attached to a protrusion 46 protruding from the upper surface 40 of the first column member 32. Similarly, the sheet member 44 has the other end on the second column member 34 side attached to a protrusion 48 protruding from the upper surface 42 of the second column member 34. When the sheet member 44 is a net, the sheet member 44 is coupled to the first column member 32 and the second column member 34, to achieve a state where tension is slightly applied to the net (state where the net is not completely sagged). In some embodiments, although not elaborated in the figures, the sheet member 44 has one end attached to a side surface of the first column member 32 and has the other end attached to a side surface of the second column member 34.

According to the mode illustrated in FIG. 10 as an example, the sheet member can be applied as the support member 14. Since the sheet member 44 covers the upper part of the gap 30, the amount of splashing water at the time when the floating body apparatus 4 receives the main body 2a of the meteorological tower 2A can be reduced.

In a case where the offshore structure is an offshore windmill, the main body of the windmill may be collapsed toward the front face side or the back face side of the main body of the windmill in the collapsing step S103, to prevent the floating body apparatus 4 from being damaged, due to a blade of the windmill hitting the floating body apparatus 4 when the windmill main body collapsing toward the floating body apparatus 4 is supported. Alternatively, the blade may be removed in advance before the main body of the windmill collapses.

### Second Embodiment

### (Method of disassembling tower type offshore structure)

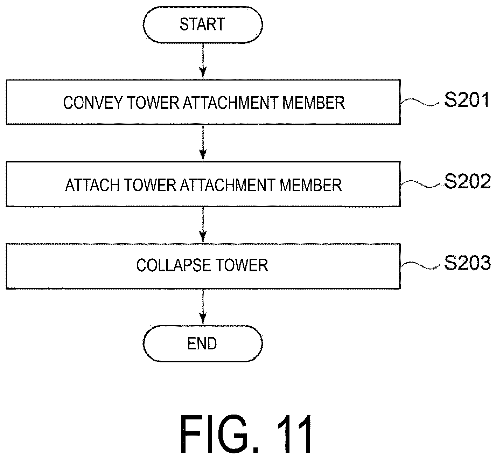

FIG. 11 is a flowchart illustrating an overview of a method of disassembling a tower type offshore structure according to a second embodiment. The tower type offshore structure includes a tower 8B, and is, for example, a meteorological tower, a transmission tower, a lighthouse, a leg structure of an offshore structure, or an offshore windmill.

As illustrated in FIG. 11, the method of disassembling a tower type offshore structure according to the second embodiment includes a conveying step S201 of conveying a tower attachment member 60 toward the tower 8B, an attaching step S202 of attaching the tower attachment member 60 to a surface (water entering surface) which is part of the surface of the tower 8B that is more on the upper side than the cutting position P1 and faces the collapsing direction, and a collapsing step S203 of cutting the tower 8B and collapsing the tower 8B with the surface to which the tower attachment member 60 is attached first entering the water.

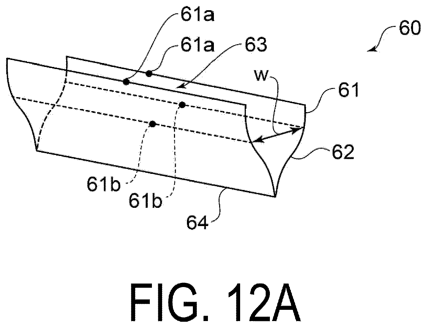

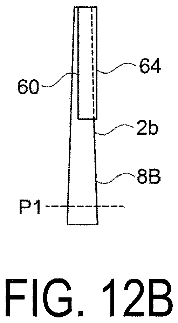

The tower attachment member 60 will be described. FIG. 12A is a diagram illustrating the tower attachment member 60 according to the second embodiment. FIG. 12B is a diagram illustrating a state where the tower attachment member 60 is attached to the tower 8B.

In the mode illustrated in FIG. 12A as an example, the tower attachment member 60 includes a tower fitting portion 61 and a tower tip portion 62.

The tower fitting portion 61 has a tubular shape and has one end 61a where an insertion port 63, into which the tower 8B is inserted, is formed. The tower fitting portion 61 has the other end 61b serving as a position to be in contact with the tower 8B inserted. In this manner, the tower 8B can be fit in the tower fitting portion 61.

The tower tip portion 62 is connected to the other end 61b of the tower fitting portion 61 and extends toward the side opposite to the insertion port 63. The tower tip portion 62 has a tapered shape with a width W of an internal space of the tower fitting portion 61 decreasing toward a tip 64 (one end on the side opposite to the other end 61b of the tower fitting portion 61). When the attaching step S202 of attaching such a tower attachment member 60 is performed, the tower attachment member 60 is in a state of being attached to a main body 2b of a windmill 2B as illustrated in FIG. 12B as an example. In this state, the tower tip portion 62 is tapered in the collapsing direction d1. In the present embodiment, the tower attachment member 60 is described as one corresponding to the tower 8B having a cylindrical shape. For example, if the tower has a quadrangle shape such as a rectangle, the tower fitting portion 61 may have a shape corresponding to this to be attachable.

### Operational Effects

According to the second embodiment, with the tower 8B collapsed toward the sea with the tower attachment member 60 attached, the amount of splashing water at the time when the tower 8B collapses toward the sea in the collapsing step S203 can be reduced.

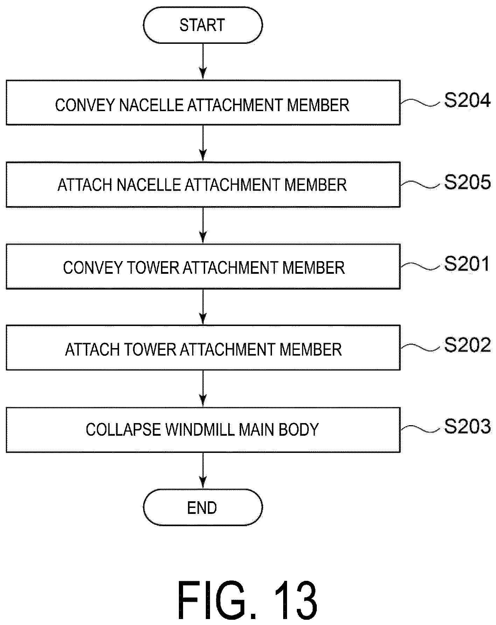

A modification of the second embodiment will be described. FIG. 13 is a flowchart illustrating an overview of a method of disassembling an offshore windmill according to a modification of the second embodiment. A case where the tower type offshore structure is an offshore windmill will be described as an example. Hereinafter, the offshore windmill will be simply referred to as the windmill 2B. In the modification, a blade is removed from the windmill 2B in advance.

As illustrated in FIG. 13 as an example, the method of disassembling the offshore windmill includes a conveying step S204 of conveying a nacelle attachment member 65 toward the tower 8B of the windmill 2B and an attaching step S205 of attaching the nacelle attachment member 65 on a surface of a nacelle 72 of the windmill 2B on the back face side of the main body 2b of the windmill 2B.

In the mode illustrated in FIG. 13 as an example, the conveying step S204 of conveying the nacelle attachment member 65 and the attaching step S205 of attaching the nacelle attachment member 65 are each performed before the conveying step S201 of conveying the tower attachment member 60.

In some embodiments, the conveying step S201 of conveying the tower attachment member 60 and the conveying step S204 of conveying the nacelle attachment member 65 are simultaneously performed. In some embodiments, the attaching step S202 of attaching the tower attachment member 60 is performed after the attaching step S205 of attaching the nacelle attachment member 65. In this case, the collapsing step S203 is performed after the attaching step S202 of attaching the tower attachment member 60.

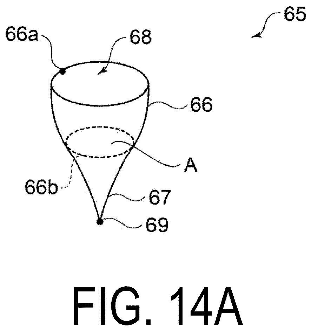

The nacelle attachment member 65 will be described. FIG. 14A is a diagram illustrating a configuration of the nacelle attachment member 65 according to a modification of the second embodiment.

In the mode illustrated in FIG. 14A as an example, the nacelle attachment member 65 includes a nacelle fitting portion 66 and a nacelle tip portion 67.

The nacelle fitting portion 66 has a tubular shape and has one end 66a where an insertion port 68, into which the nacelle 72 is inserted, is formed. The nacelle fitting portion 66 has the other end 66b serving as a position to be in contact with the nacelle 72 inserted. In this manner, the nacelle 72 can be fit in the nacelle fitting portion 66. In the mode illustrated in FIG. 14A as an example, one end 66a of the nacelle fitting portion 66 forms an oval shape, but the present disclosure is not limited to this mode.

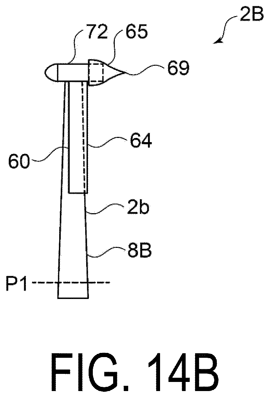

The nacelle tip portion 67 is connected to the other end 66b of the nacelle fitting portion 66 and extends toward the side opposite to the insertion port 68. The nacelle tip portion 67 has a tapered shape with an area A of an internal space of the nacelle fitting portion 66 decreasing toward a tip 69 (one end on the side opposite to the other end 66b of the nacelle fitting portion 66). When the attaching step S205 of attaching such a nacelle attachment member 65, the nacelle attachment member 65 is in a state of being attached to the nacelle 72 as illustrated in FIG. 14B as an example. In this state, the nacelle tip portion 67 is tapered in the collapsing direction d1.

According to the modification of the second embodiment, the main body 2b of the windmill 2B is collapsed toward the sea in a state where the nacelle attachment member 65 is attached in addition to the tower attachment member 60, whereby the amount of splashing water at the time when the main body 2b of the windmill 2B collapses toward the sea in the collapsing step S203 can be further reduced. In some embodiments, the main body 2b of the windmill 2B may collapse toward the sea, in a state where the nacelle attachment member 65 is attached to the nacelle 72, without attaching the tower attachment member 60 to the main body 2b of the windmill 2B.

While in the above embodiments, the method of disassembling the meteorological tower 2A, the method of disassembling the tower type offshore structure, and the method of disassembling the windmill 2B are described as examples, the present disclosure is applicable to a method of disassembling an offshore structure including a tower not limited to the meteorological tower 2A, the tower type offshore structure, and the windmill 2B. The present disclosure is not limited to the above-described embodiments, and includes modes obtained by modifying the above-described embodiments and modes obtained by appropriately combining these modes.

For example, while in the collecting step S104 according to the first embodiment, the floating body apparatus 4 carrying the main body 2a of the meteorological tower 2A is conveyed to the shore, and the main body 2a of the meteorological tower 2A is pulled up onto the land to be collected, in some embodiments, the main body 2a of the meteorological tower 2A may be disassembled using a ship with heavy equipment (not illustrated) or the like before the main body 2a of the meteorological tower 2A is conveyed to the shore after the collapsing step S103.

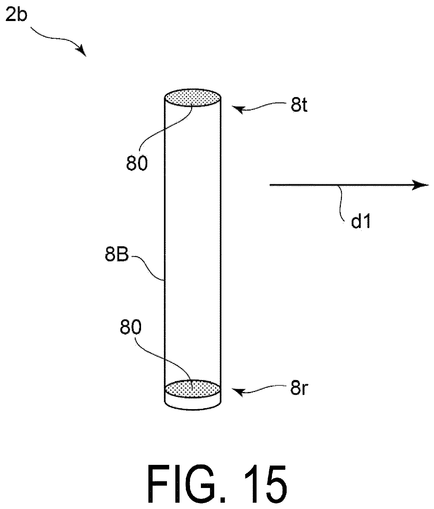

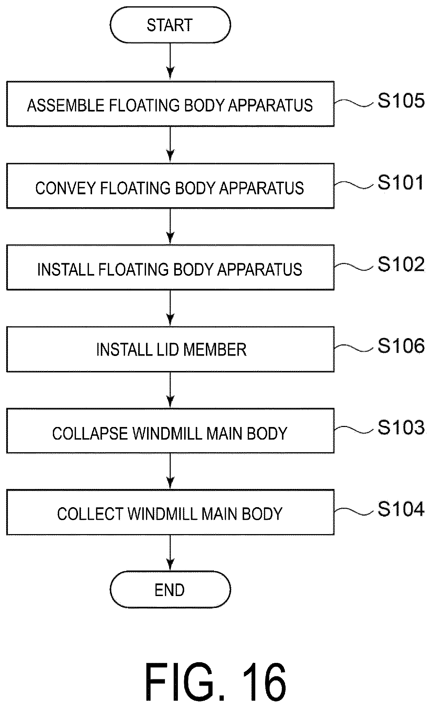

For example, when the method of disassembling the meteorological tower 2A according to the first embodiment is applied to the tower type offshore structure or the windmill 2B, a lid member 80 to restrict the entry of seawater into the tower 8B may be provided on each of the root portion 8r of the tower 8B and a tip portion 8t of the tower 8B as illustrated in FIG. 15 before the collapsing step S103. Thus, in some embodiments, the method of disassembling the windmill 2B includes a lid installing step S106 of providing the lid member 80 to each of the root portion 8r of the tower 8B and the tip portion 8t of the tower 8B before the collapsing step S203 as illustrated in FIG. 16.

With this configuration, when the tower 8B is cut and the main body 2b of the windmill 2B is collapsed in the collapsing step S103, escaping of air in the tower 8B due to the entry of seawater into the tower 8B is suppressed, so that the tower 8B is likely to float in seawater. Thus, the main body 2b of the tower 8B or the windmill 2B is less likely to sink in the sea. Thus, the buoyant force required for the floating body apparatus 4 to make the main body 2b of the tower 8B or the windmill 2B float in the seawater can be made small. In the case of the windmill in particular, scattering or leaking of oil, dust, or the like in the tower 8B of the windmill 2B to the outside of the tower 8B can be suppressed.

The lid member 80 on the root portion 8r side is preferably provided at a portion above the cutting position P1 of the tower 8B while being separated from the cutting position P1 of the tower 8B by an appropriate distance, so as not to be affected by laser, explosion, or other mechanical methods performed on the tower 8B in the collapsing step S103. In some embodiments, a floating member may be attached to the tower 8B instead of the lid member 80, to make the tower 8B float.

The invention is defined by the appended claims.

## Claims

1. A method of disassembling an offshore structure, the method comprising:
a conveying step (S101) of conveying a floating body apparatus (4) toward a tower (8A) provided in the offshore structure;
an installing step (S102) of installing the floating body apparatus (4) next to the tower (2A);
a collapsing step (S103) of cutting the tower (8A) and collapsing a main body (2a) of the offshore structure toward the floating body apparatus (4); and
a collecting step (S104) of collecting the main body (2a) of the offshore structure,
the floating body apparatus (4) comprising:
at least one column (10) including a ballast tank (21);
a plate member (12) coupled to the at least one column (10) underwater with the column (10) installed offshore; and
a support member (14) that is coupled to the at least one column (10) offshore with the column (10) installed above seawater and is capable of supporting the main body (2a) of the offshore structure collapsed toward the floating body apparatus (4), wherein the at least one column (10) includes a plurality of columns,
the floating body apparatus (4) further comprises a coupling member (20) to couple the plurality of columns (10) to each other in a row shape, and
the method further comprises a coupling step (S105) of coupling the plurality of columns (10) to each other in the row shape using the coupling member (20) before the installing step,
the method being **characterized in that**
the installing step (S102) includes connecting the tower (8A) to one end portion of the coupling member (20) on a tower side using a first rope (23A), connecting a ship (6) to another end portion of the coupling member (20) on a side opposite to the tower side using a second rope (23B), and pulling the coupling member (20) using the ship (6).

2. The method of disassembling an offshore
structure according to claim 1, wherein
the coupling member (20) includes one plate-like member (22) having a longitudinal direction,
a plurality of insertion holes (24) are formed in the one plate-like member (22) spaced with each other along the longitudinal direction, and
the coupling step (S105) includes inserting each of the plurality of columns (10) into a corresponding one of the plurality of insertion holes (24).

3. The method of disassembling an offshore structure according to claim 1, wherein a specific gravity of the coupling member (20) is 100% or more and less than 120% of a specific gravity of seawater.

4. The method of disassembling an offshore structure according to claim 1, wherein
the plate member (12) is coupled to a lower surface of the column (10), and
an area of a lower surface of the plate member (12) is larger than an area of the lower surface of the column (10) .

5. The method of disassembling an offshore structure according to claim 1, wherein
the support member (14) includes a recess (16) provided in an upper surface of the column (10) and recessed toward a side of the column (10), and
the recess (16) is wider than the main body (2a) of the offshore structure in a direction orthogonal to a collapsing direction which is, when the offshore structure is viewed from above, a direction in which the main body (2a) of the offshore structure is collapsed toward the floating body apparatus (4) in the collapsing step.

6. The method of disassembling an offshore structure according to claim 1, wherein
the at least one column (10) includes a first column member (32) and a second column member (34) facing each other with a gap in between,
the plate member (12) connects a lower surface of the first column member (32) and a lower surface of the second column member, and
the support member (14) connects an upper surface of the first column member (32) and an upper surface of the second column member.

7. The method of disassembling an offshore structure according to claim 1, wherein
the at least one column (10) includes a first column member (32) and a second column member (34) facing each other with a gap in between,
the plate member (12) connects a lower surface of the first column member (32) and a lower surface of the second column member (34), and
the support member (14) includes a sheet member (44) having a sheet shape and disposed to cover an upper part of the gap.

8. The method of disassembling an offshore structure according to claim 1, wherein
the collapsing step (S103) includes
a first cutting step of forming, by a mechanical method, a first notch (C1) in the tower (8A) from one side of the tower in a horizontal direction without penetrating the tower,
a second cutting step of forming, by a mechanical method, a second notch (C2) to be connected to the first notch (C1) in the tower at an angle different from an angle of the first notch (C1) from the one side of the tower (8A) in the horizontal direction without penetrating the tower (8A), and
a third cutting step of forming, by a mechanical method, in the tower, a third notch (C3) to be connected to at least one of the first notch (C1) and the second notch (C2) from another side opposite to the one side of the tower in the horizontal direction.

9. The method of disassembling an offshore structure according to claim 8, wherein the collapsing step (S103) includes cutting the tower (8A) while pulling the tower (8A) in two different directions.

10. The method of disassembling an offshore structure according to claim 1 further comprising a step of providing a lid member (80) to restrict entry of seawater into the tower (8A) on each of a root portion (8r) of the tower and a tip (8t) portion of the tower (8A) before the collapsing step.

11. The method of disassembling an offshore structure according to claim 1, wherein the collecting step (S104) includes towing, to a land, the floating body apparatus (4) on which the main body (2a) of the offshore structure is mounted and pulling up the main body (2a) of the offshore structure onto the land.

12. The method of disassembling an offshore structure according to claim 1, wherein
the offshore structure is a windmill, and
the collapsing step (S103) includes collapsing a main body (2a) of the windmill toward a front face side or a back face side of the main body (2a) of the windmill.

## Patentansprüche

1. Verfahren zur Demontage einer Offshore-Struktur, wobei das Verfahren aufweist:
einen Transportschritt (S101) zum Transportieren einer Schwimmkörpervorrichtung (4) hin zu einem Turm (8A), der in der Offshore-Struktur bereitgestellt ist;
einen Installationsschritt (S102) zum Installieren der Schwimmkörpervorrichtung (4) neben dem Turm (2A);
einen Umsturzschritt (S103), bei dem der Turm (8A) durchtrennt wird und ein Hauptkörper (2a) der Offshore-Struktur hin zu der Schwimmkörpervorrichtung (4) zum Umstürzen gebracht wird; und
einen Sammelschritt (S104) zum Sammeln des Hauptkörpers (2a) der Offshore-Struktur,
wobei die Schwimmkörpervorrichtung (4) aufweist:
mindestens eine Säule (10) mit einem Ballasttank (21);
ein Plattenelement (12), das, wenn die Säule (10) offshore installiert ist, unter Wasser an die mindestens eine Säule (10) gekoppelt ist; und
ein Trägerelement (14), das offshore mit der mindestens einen Säule (10) gekoppelt ist, wobei die Säule über dem Meeresspiegel angeordnet ist, und das geeignet ist, den zu der Schwimmkörpervorrichtung (4) hin umgestürzten Hauptkörper (2a) der Offshore-Struktur zu tragen, wobei die mindestens eine Säule (10) mehrere Säulen aufweist,
die Schwimmkörpervorrichtung (4) ferner ein Kopplungselement (20) aufweist, um die mehreren Säulen (10) in Reihe aneinander zu koppeln, und
das Verfahren vor dem Installationsschritt ferner aufweist: einen Kopplungsschritt (S105) zum Aneinanderkoppeln der mehreren Säulen (10) in Reihe unter Verwendung des Kopplungselements (20),
wobei das Verfahren **dadurch gekennzeichnet ist, dass**
der Installationsschritt (S102) aufweist:
Verbinden des Turms (8A) mit einem turmseitigen Endabschnitt des Kopplungselements (20) unter Verwendung eines ersten Seils (23A), Verbinden eines Schiffs (6) mit einem anderen Endabschnitt des Kopplungselements (20), der dem turmseitigen Endabschnitt gegenüberliegt, unter Verwendung eines zweiten Seils (23B) und Ziehen des Kopplungselements (20) unter Verwendung des Schiffs (6).

2. Verfahren zur Demontage einer Offshore-Struktur nach Anspruch 1, wobei
das Kopplungselement (20) ein plattenähnliches Element (22), das eine Längsrichtung hat, aufweist,
mehrere entlang der Längsrichtung voneinander beabstandete Einsetzlöcher (24) in dem plattenähnlichen Element (22) gebildet sind, und
der Kopplungsschritt (S105) aufweist: Einsetzen jeder der mehreren Säulen (10) in ein entsprechendes der mehreren Einsetzlöcher (24).

3. Verfahren zur Demontage einer Offshore-Struktur nach Anspruch 1, wobei ein spezifisches Gewicht des Kopplungselements (20) 100% oder mehr und weniger als 120% eines spezifischen Gewichts von Meerwasser beträgt.

4. Verfahren zur Demontage einer Offshore-Struktur nach Anspruch 1, wobei
das Plattenelement (12) an eine untere Oberfläche der Säule (10) gekoppelt ist, und
ein Flächeninhalt einer unteren Oberfläche des Plattenelements (12) größer als ein Flächeninhalt der unteren Oberfläche der Säule (10) ist.

5. Verfahren zur Demontage einer Offshore-Struktur nach Anspruch 1, wobei
das Trägerelement (14) eine Aussparung (16) aufweist, die in einer oberen Oberfläche der Säule (10) bereitgestellt ist und zu einer Seite der Säule (10) hin ausgespart ist, und
die Aussparung (16) in einer Richtung, die orthogonal zu einer Umsturzrichtung ist, breiter als der Hauptkörper (2a) der Offshore-Struktur ist, wobei die Umsturzrichtung eine Richtung ist, in der - wenn von oben auf die Offshore-Struktur geblickt - der Hauptkörper (2a) der Offshore-Struktur in dem Umsturzschritt hin zu der Schwimmkörpervorrichtung (4) umstürzt.

6. Verfahren zur Demontage einer Offshore-Struktur nach Anspruch 1, wobei
die mindestens eine Säule (10) ein erstes Säulenelement (32) und ein zweites Säulenelement (34) aufweist, die sich mit einem Spalt dazwischen gegenüberliegen,
das Plattenelement (12) eine untere Oberfläche des ersten Säulenelements (32) und eine untere Oberfläche des zweiten Säulenelements verbindet, und
das Trägerelement (14) eine obere Oberfläche des ersten Säulenelements (32) und eine obere Oberfläche des zweiten Säulenelements verbindet.

7. Verfahren zur Demontage einer Offshore-Struktur nach Anspruch 1, wobei
die mindestens eine Säule (10) ein erstes Säulenelement (32) und ein zweites Säulenelement (34) aufweist, die sich mit einem Spalt dazwischen gegenüberliegen,
das Plattenelement (12) eine untere Oberfläche des ersten Säulenelements (32) und eine untere Oberfläche des zweiten Säulenelements (34) verbindet, und
das Trägerelement (14) ein flächiges Element (44) aufweist, das eine flächige Form hat und angeordnet ist, um einen oberen Teil des Spalts zu bedecken.

8. Verfahren zur Demontage einer Offshore-Struktur nach Anspruch 1, wobei
der Umsturzschritt (S103) aufweist:
einen ersten Schneideschritt, um mittels eines mechanischen Verfahrens eine erste Kerbe (C1) in dem Turm (8A) zu bilden und zwar von einer Seite des Turms aus in einer horizontalen Richtung, ohne dabei den Turm zu durchdringen,
einen zweiten Schneideschritt, um mittels eines mechanischen Verfahrens eine mit der ersten Kerbe (C1) zu verbindende zweite Kerbe (C2) in dem Turm zu bilden, und zwar von der besagten Seite des Turms aus in einem Winkel, der sich von einem Winkel der ersten Kerbe (C1) unterscheidet, in der horizontalen Richtung, ohne dabei den Turm zu durchdringen, und
einen dritten Schneideschritt, um mittels eines mechanischen Verfahrens eine mit der ersten Kerbe (C1) und/oder der zweiten Kerbe (C2) zu verbindende dritte Kerbe (C3) in dem Turm zu bilden und zwar von einer anderen Seite des Turms aus, die der besagten Seite gegenüberliegt, in der horizontalen Richtung.

9. Verfahren zur Demontage einer Offshore-Struktur nach Anspruch 8, wobei der Umsturzschritt (S103) aufweist: Durchtrennen des Turms (8A) und zugleich Ziehen des Turms (8A) in zwei unterschiedliche Richtungen.

10. Verfahren zur Demontage einer Offshore-Struktur nach Anspruch 1, ferner aufweisend vor dem Umsturzschritt einen Schritt zum Bereitstellen eines Deckelelements (80), um Eintritt von Meereswasser in den Turm (8A) zu beschränken, sowohl an einem Fußabschnitt (8r) des Turms wie auch an einem Kopfabschnitt (8t) des Turms (8A).

11. Verfahren zur Demontage einer Offshore-Struktur nach Anspruch 1, wobei der Sammelschritt (S104) aufweist: Schleppen der Schwimmkörpervorrichtung (4), an der der Hauptkörper (2a) der Offshore-Struktur angebracht ist, zu einem Land und Ziehen des Hauptkörpers (2a) der Offshore-Struktur an Land.

12. Verfahren zur Demontage einer Offshore-Struktur nach Anspruch 1, wobei
die Offshore-Struktur eine Windmühle ist, und
der Umsturzschritt (S103) aufweist: Umstürzen eines Hauptkörpers (2a) der Windmühle hin zu einer Vorderflächenseite oder einer Rückflächenseite des Hauptkörpers (2a) der Windmühle.

## Revendications

1. Méthode de démontage d'une structure en mer, la méthode comprenant :
une étape de transport (S101) consistant à transporter un appareil à corps flottant (4) en direction d'une tour (8A) prévue dans la structure en mer ;
une étape d'installation (S102) consistant à installer l'appareil à corps flottant (4) à côté de la tour (2A) ;
une étape d'effondrement (S103) consistant à découper la tour (8A) et à amener un corps principal (2a) de la structure en mer à s'effondrer en direction de l'appareil à corps flottant (4) ; et une étape de collecte (S104) consistant à collecter le corps principal (2a) de la structure en mer,
l'appareil à corps flottant (4) comprenant :
au moins une colonne (10) incluant un réservoir de ballast (21) ;
un élément de plaque (12) accouplé à l'au moins une colonne (10) sous-marine avec la colonne (10) installée en mer ; et
un élément de support (14) qui est accouplé à l'au moins une colonne (10) en mer avec la colonne (10) installée au-dessus de l'eau de mer et est capable de supporter le corps principal (2a) de la structure en mer effondrée en direction de l'appareil à corps flottant (4), dans lequel l'au moins une colonne (10) inclut une pluralité de colonnes,
l'appareil à corps flottant (4) comprend en outre un élément d'accouplement (20) pour accoupler la pluralité de colonnes (10) les unes aux autres en une forme de rangée, et
la méthode comprend en outre une étape d'accouplement (S105) consistant à accoupler la pluralité de colonnes (10) entre elles en forme de rangée à l'aide de l'élément d'accouplement (20) avant l'étape d'installation,
la méthode étant **caractérisée en ce que** l'étape d'installation (S102) inclut
le raccordement de la tour (8A) à une partie d'extrémité de l'élément d'accouplement (20) d'un côté de la tour à l'aide d'une première corde (23A), le raccordement d'un bateau (6) à une autre partie d'extrémité de l'élément d'accouplement (20) d'un côté en regard du côté de la tour à l'aide d'une seconde corde (23B), et la traction de l'élément d'accouplement (20) à l'aide du bateau (6).

2. Méthode de démontage d'une structure en mer selon la revendication 1, dans laquelle
l'élément d'accouplement (20) inclut un élément de type plaque (22) présentant une direction longitudinale,
une pluralité de trous d'insertion (24) sont formés dans ledit élément de type plaque (22) espacés les uns des autres le long de la direction longitudinale, et
l'étape d'accouplement (S105) inclut l'insertion de chacune de la pluralité de colonnes (10) dans un trou d'insertion (24) correspondant de la pluralité de trous d'insertion.

3. Méthode de démontage d'une structure en mer selon la revendication 1, dans lequel une densité de l'élément d'accouplement (20) est de 100 % ou plus et inférieure à 120 % d'une densité d'eau de mer.

4. Méthode de démontage d'une structure en mer selon la revendication 1, dans laquelle
l'élément de plaque (12) est accouplé à une surface inférieure de la colonne (10), et
une zone d'une surface inférieure de l'élément de plaque (12) est plus grande qu'une zone de la surface inférieure de la colonne (10).

5. Méthode de démontage d'une structure en mer selon la revendication 1, dans laquelle
l'élément de support (14) inclut un évidement (16) prévu dans une surface supérieure de la colonne (10) et évidé en direction d'un côté de la colonne (10), et
l'évidement (16) est plus large que le corps principal (2a) de la structure en mer dans une direction orthogonale à une direction d'effondrement qui est, lorsque la structure en mer est vue du dessus, une direction dans laquelle le corps principal (2a) de la structure en mer s'effondre en direction de l'appareil à corps flottant (4) dans l'étape d'effondrement.

6. Méthode de démontage d'une structure en mer selon la revendication 1, dans laquelle
l'au moins une colonne (10) inclut un premier élément de colonne (32) et un second élément de colonne (34) se faisant face avec un espace entre eux,
l'élément de plaque (12) raccorde une surface inférieure du premier élément de colonne (32) et une surface inférieure du second élément de colonne, et
l'élément de support (14) raccorde une surface supérieure du premier élément de colonne (32) et une surface supérieure du second élément de colonne.

7. Méthode de démontage d'une structure en mer selon la revendication 1, dans laquelle
l'au moins une colonne (10) inclut un premier élément de colonne (32) et un second élément de colonne (34) se faisant face avec un espace entre eux,
l'élément de plaque (12) raccorde une surface inférieure du premier élément de colonne (32) et une surface inférieure du second élément de colonne (34), et
l'élément de support (14) inclut un élément de feuille (44) présentant une forme de feuille et disposé pour recouvrir une partie supérieure de l'espace.

8. Méthode de démontage d'une structure en mer selon la revendication 1, dans laquelle
l'étape d'effondrement (S103) inclut
une première étape de découpe consistant à former, par une méthode mécanique, une première encoche (C1) dans la tour (8A) à partir d'un côté de la tour dans une direction horizontale sans pénétrer dans la tour,
une deuxième étape de découpe consistant à former, par une méthode mécanique, une deuxième encoche (C2) devant être raccordée à la première encoche (C1) dans la tour selon un angle différent d'un angle de la première encoche (C1) à partir d'un côté de la tour (8A) dans la direction horizontale sans pénétrer dans la tour (8A), et
une troisième étape de découpe consistant à former, par une méthode mécanique, dans la tour, une troisième encoche (C3) à raccorder à au moins l'une de la première encoche (C1) et de la deuxième encoche (C2) d'un autre côté en regard de l'un des côtés de la tour dans la direction horizontale.

9. Méthode de démontage d'une structure en mer selon la revendication 8, dans laquelle l'étape d'effondrement (S103) inclut la découpe de la tour (8A) tout en tirant la tour (8A) dans deux directions différentes.

10. Méthode de démontage d'une structure en mer selon la revendication 1 comprenant en outre une étape de fourniture d'un élément de couvercle (80) pour restreindre l'entrée d'eau de mer dans la tour (8A) sur chacune d'une partie racine (8r) de la tour et d'une partie pointe (8t) de la tour (8A) avant l'étape d'effondrement.

11. Méthode de démontage d'une structure en mer selon la revendication 1, dans laquelle l'étape de collecte (S104) inclut le remorquage, vers la terre, de l'appareil à corps flottant (4) sur lequel est monté le corps principal (2a) de la structure en mer et le hissage du corps principal (2a) de la structure en mer sur la terre.

12. Méthode de démontage d'une structure en mer selon la revendication 1, dans laquelle
la structure en mer est une éolienne, et
l'étape d'effondrement (S103) inclut l'effondrement d'un corps principal (2a) de l'éolienne en direction d'un côté de face avant ou d'un côté de face arrière du corps principal (2a) de l'éolienne.
